# EUROPEAN PATENT SPECIFICATION

(11) **EP 2 960 695 B1**
(45) Date of publication and mention of the grant of the patent: **12.08.2020**
(21) Application number: 14173783.3
(22) Date of filing: 24.06.2014
(51) Int. Cl.: G02B 6/38

(54) **Connector for a cable and connector assembly**
Verbinder für ein Kabel und Verbinderanordnung
Connecteur pour un câble et ensemble connecteur

(43) Date of publication of application: 30.12.2015
(73) Proprietor: TE Connectivity Nederland B.V., 5222 AR 's Hertogenbosch (NL)
(72) Inventor: Dieduksman, Andreas Winandus, 5237 HV s'Hertogenbosch (NL); Drijfhout, Tekke, 5388 CG Nistelrode (NL); Dendas, Freddy Jean Phillip, 3600 Genk (BE)
(74) Representative: Grünecker Patent- und Rechtsanwälte PartG mbB

(56) References cited:
- EP-A1- 2 527 894
- CN-Y- 201 233 463
- US-A- 4 747 656
- US-A1- 2014 003 769

## Description

The invention relates to a connector for a cable and a connector assembly comprising a connector.

Connectors often comprise a plurality of housings for protecting the connector and/or for attaching the connector to a counter connector. However, in many cases the plurality of housings can only fulfill this function when the housings are in a defined relative position to each other. To ensure that the housings remain in a desired relative position, connectors often have locking arrangements. If the locking arrangement is not operated correctly or operated at a wrong time, the housings cannot fulfill their function and parts of the connector, the cable and/or the counter connector can be damaged.

From US 4 747 656 A, a connector for an optical cable is shown in which an outer housing is squeezed onto an inner housing.

The object of the invention is to provide a connector in which the risk of damaging parts of the connector, the cable and/or the counter connector is reduced.

This object is achieved by a connector comprising: an outer housing; an inner housing, said inner housing being adapted to be at least partly received within said outer housing; a rotatory locking arrangement comprising a deflectable locking element; a strain relief arrangement, being adapted to be moved along an assembly path with respect to at least one of said inner housing and said outer housing, said assembly path starting at an initial position and ending at a final position, said strain relief arrangement being adapted to engage said rotatory locking arrangement by getting into contact with the deflectable locking element along said assembly path from a locking position on, said locking position being located between said initial position and said final position; said rotatory locking arrangement being adapted to couple said inner housing and said outer housing in a rotatory locked manner upon engagement by said strain relief arrangement) wherein said strain relief arrangement comprises a nut (90), which nut (90) together with the deflectable locking element (80) ensures that the rotatory locking between the inner housing (5) and the outer housing (6) is performed before the strain relief arrangement (9) comes into full operation. With the inventive solution, the locking of the two housings, i.e. the blocking of any rotation of the inner housing relative to the outer housing about a direction, for example a longitudinal direction, is automatically performed when the strain relief arrangement is operated. Thus, the risk of a wrong operation leaving the two housings unlocked is reduced and damages are less likely. This does not only apply to the assembly of the connector but also to the disassembling. Further, the assembly and the disassembly are easier than before as only one action has to be performed and the other action is performed automatically.

The invention can be further improved by the following developments and advantageous embodiments, which are independent of each other and can be combined arbitrarily. In particular, these developments and advantageous embodiments can in particular be independent of the inventive solution as just described and represent independent inventions.

A backlash between the inner housing and the outer housing can be possible when the two are coupled in a rotatory locked manner. In an alternative embodiment, the coupling can be backlash free, thus not allowing a movement of the inner housing relative to the outer housing.

Said rotatory locking arrangement can have at least one deflectable locking element, said locking element being deflected upon engagement of said strain relief arrangement and said rotatory locking arrangement. Such a solution can be easy to construct and to produce. In particular, the deflectable locking element can be elastically deflectable so that the deflectable locking element automatically removes the coupling between the inner housing and the outer housing when the connector is disassembled.

The locking element can be deflected to positively lock into a complementary locking element. Such a complementary locking element can be designed for a safe positive fit or lock between the two. In an alternative embodiment, the locking element could also be positively locked with other structures or geometries that are already present on the inner housing or the outer housing. The locking element and/or the complementary locking element can be integral or monolithic with said inner housing or said outer housing, respectively. Such housings can be produced more easily than housings with separate locking elements.

The locking element can be a tab or a finger or can have a tongue-like structure. Such geometries can be produced easily and still provide sufficient coupling efficiency while taking up little space. The locking element, in particular a tab, finger or tongue-shaped locking element can extend towards a strain relief arrangement. A free end of the locking element can face towards the strain relief arrangement. Such a development can make the operation easier, as the free end can be deflected or operated more easily.

A complementary locking element can be a groove, thus allowing an easy insertion of the locking element. A groove can also allow for a longitudinal movement of the locking element within the groove thus tolerating a movement of the locking element and/or allowing the insertion of differently shaped locking elements, in particular locking elements that have different lengths. Such a groove can in particular extend linearly along at least one of said inner and outer housing thus tolerating a linear movement. A complementary locking element, in particular a groove, can be situated radially inside of a deflectable locking element, like a tab or a finger. In this embodiment, an operation of the locking element can be particularly easy, as the tab has to be operated radially towards the inside.

Said rotatory locking arrangement can be arranged accessibly from an outside of said outer housing. Thus, an operation and/or an inspection of the rotatory locking arrangement are possible. The outer housing can have an opening allowing such an access from outside. The opening of the outer housing can still allow for a sufficient protection while an inspection or manual operation of the rotatory locking arrangement through the opening is possible. The rotatory locking arrangement can extend into such an opening, thus allowing a space saving construction of the connector. In particular, the rotatory locking arrangement can be arranged in the opening so that no space is wasted allowing for a very compact design.

The strain relief arrangement can be adapted to be screwed onto at least one of said inner and outer housings. This design is advantageous as it provides a safe connection and an easy operation.

On the strain relief arrangement and at least one of said inner and said outer housings can, in particular if the two are adapted to be screwed together, form a receiving pocket, said receiving pocket being adapted to receive at least part of said deflectable locking element in its deflected state in the receiving pocket, the deflectable locking element can be received and be protected from damage or from being brought into the undeflected state. The receiving pocket can be adapted to receive a free end of said deflectable locking element in the deflected state. This can be sufficient to secure and protect the locking element.

The inner housing and the outer housing can be rotatable with respect to each other if the rotatory locking arrangement is located between the initial position and the locking position. This allows a simple assembly of the connector, as the strain relief arrangement can be preassembled before the rotatory locking arrangement is operated. It is not necessary to work with high precision if the assembly is done manually, in particular if working in the field.

The strain relief arrangement can comprise a cable engagement member, said cable engagement member being adapted to be operated into engagement with a cable reaching into at least one of said inner and said outer housing, said operation into engagement not taking place before said strain relief arrangement has passed the locking position. This solution guarantees that during the assembly of the connector, the locking between the inner housing and the outer housing is achieved before the strain relief arrangement fixes the cable in a strain relieving manner to the inner housing and/or the outer housing. When disassembling the connector, it is assured that the cable is released and free before the locking between the inner housing and the outer housing is undone. In this way, damage can be avoided, as the cable is already loose when the housings are unlocked.

The cable engagement member can comprise a radially squeezable body, said radially squeezable body being provided with a through-hole, said through-hole being adapted to receive said cable. The term radially here relates to the through-hole and means towards the through-hole. When the radially squeezable body is squeezed, the cable is held in a strain-relieving manner in the radially squeezable body. The radially squeezable body can in turn be adapted to be fixed to an inner housing and/or an outer housing when operating the strain-relief arrangement. This can for example be achieved by a form fit or a positive locking. In an alternative, the radially squeezable body can also be fixed to the inner housing and/or the outer housing by the squeezing action. The squeezing in particular can change the shape of the radially squeezable body at least partially. The squeezing action also transfers force so that a friction between the radially squeezable body and the cable and/or other elements like the inner housing or the outer housing is amplified. The squeezable body can in particular increase one of its dimensions in one direction when squeezed in a direction perpendicular to this direction, For example when the squeezable body is squeezed in an axial direction, it can expand radially to the inside and or the outside thus squeezing the cable and/or the inner housing or outer housing.

The radially squeezable body can be arranged at least partly within said inner housing, thus saving space and allowing a sufficient contact between the inner housing and the squeezable body. The squeezable body, in the final position of said strain relief arrangement, can frictionally engage both the cable extending through said through-hole and said inner housing. In this way, the strain-relieving connection between the cable and the inner housing is made possible.

The inner housing and the outer housing can both be provided at their sides opposite to the strain relief arrangement with fixing elements, respectively, said fixing elements being adapted to engage a complementary counter connector. The fixing elements can in particular be adapted to fix the inner housing or the outer housing in an undisplaceable or rigid manner relative to the counter connector. In particular, the fixing elements for the inner housing or the outer housing can have fixing elements that only fix the inner housing or the outer housing respectively along certain directions, wherein an undisplaceable rigid connection between the connector and the counter connector is only achieved when both the inner housing and the outer housing are fixed to the counter connector.

The strain relief arrangement can be mounted to the inner housing. This results in a compact design.

A side wall of the groove 81 can be slanted or inclined in order to allow an automatic uncoupling of the inner housing and the outer housing even if the locking element is not elastic Such a side wall thus provides a ramp-like structure which can help to disengage the deflectable locking element by rotating the inner housing relative to the outer housing about the longitudinal direction, for example if the deflectable locking element has lost its elasticity due to an aging of the material of the outer housing. The other side wall, however, does not have to be inclined, in particular if the inner housing and the outer housing are connected in a bayonet-like manner.

The inner housing or the outer housing can comprise a backup element for a part of the strain relief arrangement, in particular if the rotatory locking arrangement comprises a deflectable locking element. Such a backup element can backup the strain relief arrangement when it deflects the deflectable locking element. The backup member can in particular be arranged on the same housing as the deflectable locking element. Between the deflectable locking element and the backup member, an insertion channel for the part of the strain relief arrangement can be provided. In order to allow an easy insertion in particular to make the deflection of the locking element easier, the channel and or the part of the strain relief arrangement adapted for insertion into the insertion channel can taper. They can have a wedge-like shape.

The inner housing can have a cavity adapted for receiving a part of the counter connector or an intermediate part for connecting the cable to the counter connector. An end of the cable can protrude freely into such a cavity in the assembled state so that at least a slight movement of the free end of the cable is possible and thus a movement of the cable in the cavity is possible. Furthermore, such a freely protruding cable end can also allow for the compensation of deviations in the precise alignment of the cable and/or the counter connector.

An inventive connector assembly can comprise at least one inventive connector and a counter connector, said counter connector being adapted to be positively locked to said inner housing and said outer housing in a first locking situation, said strain relief arrangement locking said locking situation if between said locking and said final position. In this way, the locking between the counter connector, the inner housing and the outer housing is performed when the strain relief arrangement is operated.

The invention will now be described in an exemplary manner by an advantageous embodiment with reference to the figures.

In the figures:
- Fig. 1: shows a schematic perspective view of a connector together with parts of a counter connector and a cable during a first assembly step;
- Fig. 2: shows a schematic perspective view of the connector of Fig. 1 in a second assembly step;
- Fig. 3: shows a schematic perspective view of the connector of Figs. 1 and 2 in a third assembly step;
- Fig. 4: shows a schematic perspective view of a detail of the assembly step of Fig. 2 and 3 with the nut removed;
- Fig. 5: shows a cross-section through the connector in the third assembly step of Fig. 3;
- Fig. 6: shows a schematic front view of the connector together with a part of a counter connector;
- Figs. 7A, 7B, 7C: show schematic perspective views of the inner housing from different angles;
- Figs. 8A, 8B, 8C, 8D: show schematic perspective views of the outer housing of the connector from different angles;
- Figs. 9A, 9B 9C, 9D, 9E: show schematic perspective views of the nut that is part of the strain relief assembly of the connector from different angles.

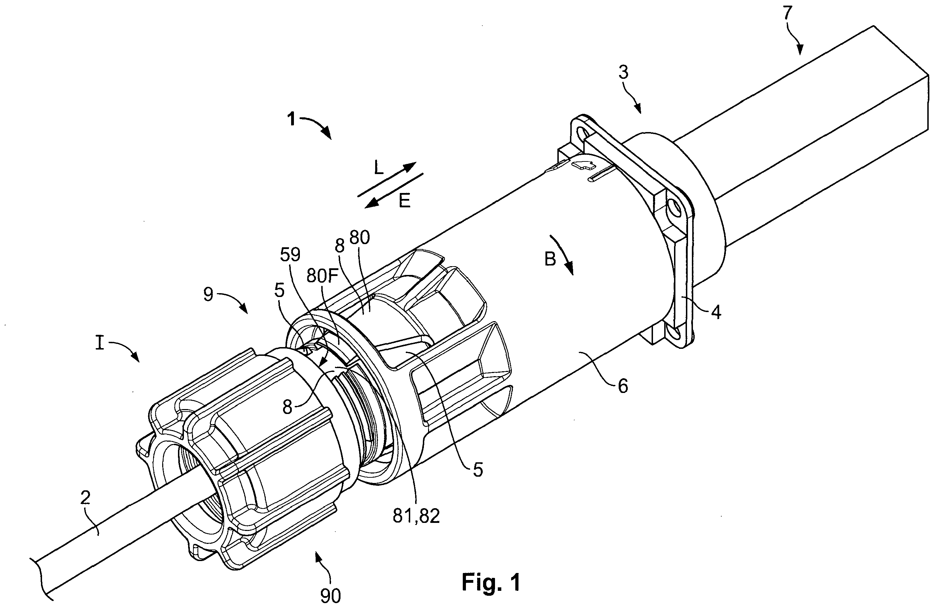

In Fig. 1, a connector 1 for a cable 2 is shown together with a counter connector 3. The counter connector 3 is shown only in parts. In particular, the counter connector 3 comprises a base plate 4 for connection to an inner housing 5 and/or an outer housing 6 of the connector 1. The counter connector 3 also comprises a transceiver 7, as the cable 2 is an optical cable, in particular an optical fibre, through which information is transmitted by light. In this plugged-in state, the inner housing 5 cannot rotate relative to the base plate 4 about the longitudinal axis L of the connector. Further, the housing 5 cannot move further into the base plate 4. The only movement of the inner housing 5 relative to the base plate 4 would be along an extraction direction E, the extraction direction E being opposite to the longitudinal direction L. However, such a movement of the inner housing 5 is blocked by the outer housing 6, in which the inner housing 5 has been received and which has then been fixed to the base plate 4 and to the inner housing 5 in a bayonet style by rotating the outer housing 6 relative to the inner housing 5 and the base plate 4 about the longitudinal direction L and along the bayonet direction B. Thus, in the state of Fig. 1, the inner housing 5 and the outer housing 6 are rigidly connected to the base plate 4.

In Fig. 1, the rigid connection between the inner housing 5 and the base plate 4 can still be undone, as the inner housing 5 is not yet rotationally locked to the outer housing 6. To allow such rotatory locking, the connector comprises a rotatory locking arrangement 8, which in Fig. 1 does not yet couple the housing 5 to the outer housing 6 in a rotatory locked manner, i.e. in a rotation blocking manner in which any rotation of the two housings 5,6 relative to each about the longitudinal direction is blocked.

The rotatory locking arrangement 8 comprises in particular an elastically deflectable locking element 80 that is designed in a tab, finger or tongue-like shape. The deflectable locking element 80 is at least at its free end 80F complementary to a groove 81 located on the inner housing 5. The groove 81 is thus a counter locking element 82 of the rotatory locking arrangement 8.

The connector 1 further comprises a strain relief arrangement 9. The strain relief arrangement 9 serves to fix the cable 2 to the connector 1, in particular to the inner housing 5 in a strain-relieving manner. When the strain relief arrangement 9 is in operation, a possible strain from the cable 2 is thus directed via the nut 90 and a cable engagement member 91 to the inner housing 5 and the outer housing 6, and thus to the base plate 4. Thus, strain from the cable 2 cannot damage elements that are inside the inner housing 5. The strain relief arrangement 9 comprises the nut 90. The nut 90 is adapted to be moved along an assembly path with respect to the inner housing 5. The assembly path starts at an axial position I when the nut 90 is brought into contact with the inner housing 5. As shown in the following figures, the nut 90 is then screwed to the inner housing 5. The assembly path thus has a helical shape. In Fig. 1, the strain relief arrangement 9 is not yet in a full operational state and does not yet lock the cable 2 to the inner housing 5 in a strain-relieving manner.

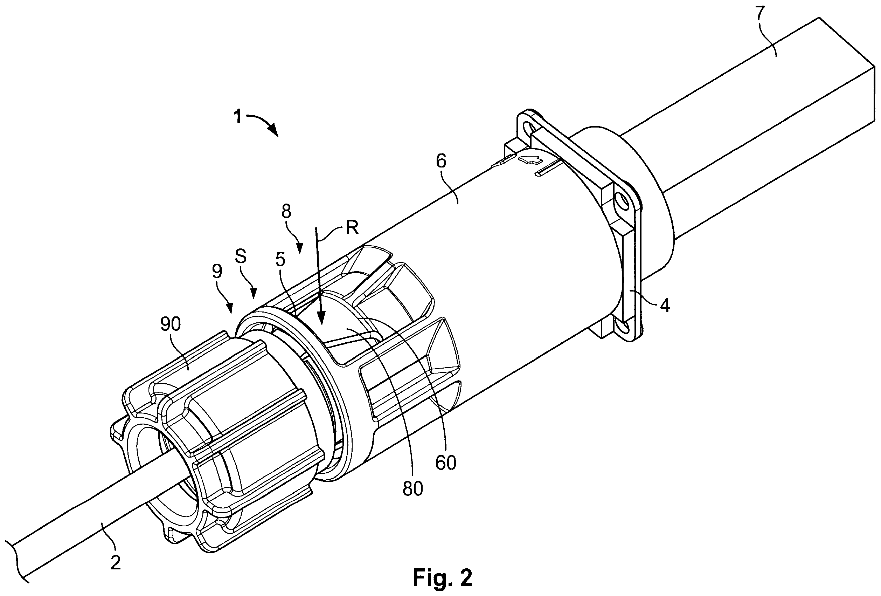

In Fig. 2, the nut 90 has been rotated relatively to the inner housing 5 and is thus loosely connected to the inner housing 5. However, the strain relief arrangement 9 does not yet provide a full strain relief. The nut 90 and thus the strain relief arrangement 9 engages the rotatory locking arrangement 8 by getting into contact with the deflectable locking element 80. Fig. 2 thus shows the locking position S of the strain relief arrangement 9. From this locking position S on, the nut 90 presses down the deflectable locking element 80 of the outer housing 6 towards the groove 81 that is located on the inner housing 5. By this, the rotatory locking arrangement 8 couples the inner housing 5 to the outer housing 6 in a rotationally rigid manner. Thus, when the nut 90 is further rotated onto the housing 5, the inner housing 5 and the outer housing 6 will be rotationally locked to each other. Thus, the inner housing 5, the outer housing 6 and the base plate 4 are rigidly connected to each other and cannot be moved relative to each other. In particular, the housings 5,6 can not rotate relative to each other about the longitudinal direction L.

The deflectable locking element 80 is deflected towards the inner housing 5 along a radial direction R. In order to inspect whether the deflectable locking element 80 is locked or not and in order to manually engage or release the deflectable locking element 80, the outer housing 6 has an opening 60. The opening 60 thus allows that the rotatory locking arrangement 8 is accessible from outside. The rotatory locking arrangement 8 extends into this opening 60 and is in particular arranged in the opening 60. Thus, the connector is compact.

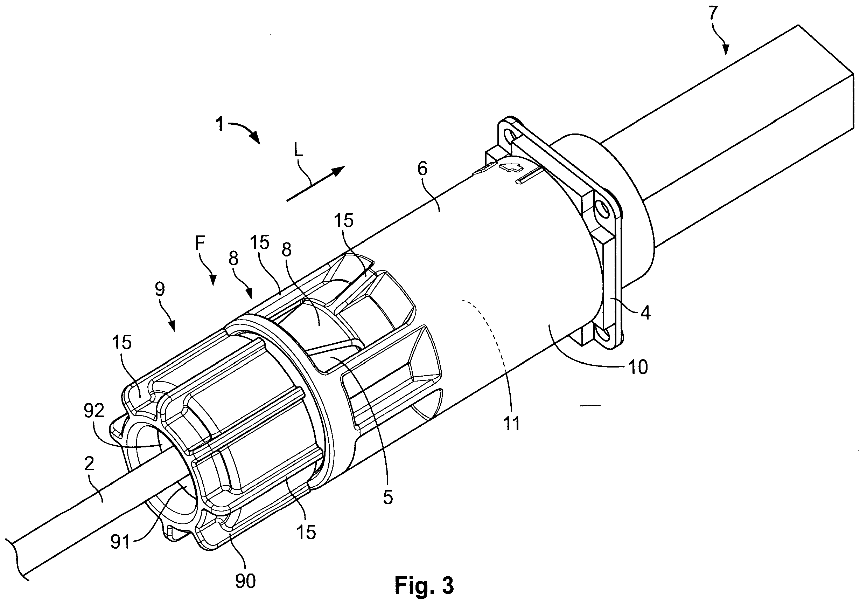

In Fig. 3, the rotatory locking arrangement 8 is shown in a final position F. In the final position F, no further rotation of the nut 90 onto the housing is possible. The final position F is thus the end of the assembly path. In this final position F, the strain relief arrangement 9 is in full operation and fixes the cable 2 via a cable engagement member 91 to the inner housing 5 and thus to the base plate 4 in a strain-relieving manner. Further, the rotatory locking arrangement 8 is still in operation and blocks a rotational movement of the inner housing 5 relative to the outer housing 6 around a longitudinal direction L.

As can be seen from Figs. 1, 2 and 3, which represent an installation of the connector 1, the strain relief arrangement 9, in particular the nut 90, together with the deflectable locking element 80 ensures that the rotatory locking between the inner housing 5 and the outer housing 6 is performed before a strain relief arrangement 9 comes into full operation. Thus, when installing the connector, the cable 2 is still not fixed in a strain-relieving manner in the connector when the rotatory locking between the inner housing 5 and the outer housing 6 takes place. On the other hand, when disassembling the connector 1, as would be done when the sequence is performed from Fig. 3 backwards to Fig. 1, and thus from the final position F via the locking position S to the initial position I, first the cable 2 is released so that no force can break the cable 2 or elements attached to the cable 2, before the rotatory locking between the inner housing 5 and the outer housing 6 is disengaged.

Thus, whenever the cable 2 is fixed to the connector 1, the inner housing 5 and the outer housing 6 are always locked relative to each other and the bayonet connection cannot be opened. Hence, the rigid connection between the inner housing 5, the outer housing 6 and the base plate 4 cannot be undone before the fixing of the cable 2 is undone.

In Fig. 3, an intermediate element 10 is also shown. The intermediate element 10 is located within a cavity 11 in the inner housing 5 and serves to connect the transceiver 7 to the cable 2.

In order to allow a better gripping of the outer housing 6 and the nut 90, the outer housing 6 and the nut 90 have rib-like gripping elements 15.

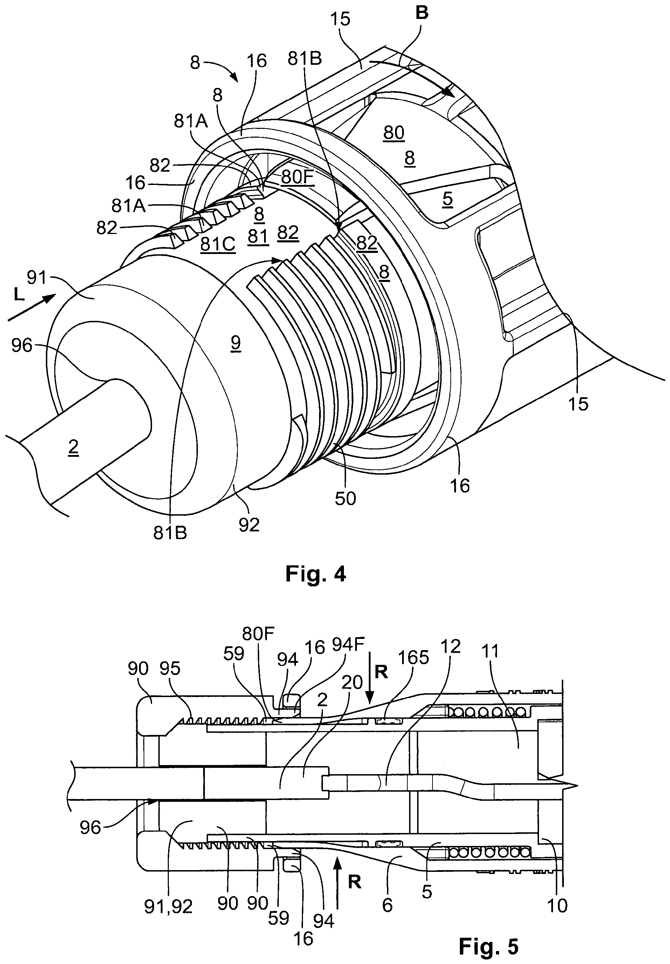

In Fig. 4, a detail of the connector 1 in the state according to Fig. 2 or 3 is shown in more detail, wherein the nut 90 has been removed in order to allow a better view on to the relevant elements.

The rotatory locking arrangement 8 is shown in the locked state in which the inner housing 5 is coupled to the outer housing 6 in a rotationally or torsionally rigid manner. Thus, the outer housing 6 cannot rotate about the longitudinal direction L relative to the inner housing 5, neither in the bayonet direction B nor against the bayonet direction B.

The inner housing 5 has a thread 50 for the corresponding counter thread 95 at the inside of the nut 90.

The locking arrangement 9 also comprises a squeezable body 92 that serves as a cable engagement member 91. The radially squeezable body 92 is provided with a through-hole 96 that is adapted to receive the cable 2. In the unsqueezed state, the through-hole 96 is slightly larger than the cable 2, so that the cable 2 can be inserted into the radially squeezable body 92. The squeezable body 92 is then squeezed by the nut 90, when the nut 90 is screwed to the inner housing 5. During this squeezing, the through-hole 96 gets smaller and the squeezable body 92 thus tightly holds the cable 2. Thus, the cable engagement member 91 is operated into engagement with the cable 2 when the nut 90 is tightened. However, this tightening, and thus the operation into engagement, does not take place before the strain relief arrangement 9 has passed the locking position S. Thus, it is guaranteed that the cable can only be fixed when the rotatory locking arrangement 8 locks the inner housing 5 to the outer housing 6. In turn, when disassembling the connector 1, the cable engagement member must first be moved out of operation before the rotatory locking arrangement 8 can unlock the connection between the inner housing 5 and the outer housing 6. Thus, the risk of damages due to rotations of the cable 2 still being fixed can be avoided. Further, such connector 1 can be operated more easily, as the locking with the rotatory locking arrangement 8 is done when the strain relief arrangement 9 is operated. Thus, only one operation is necessary instead of two.

The back-up member 16 having the shape of a ring is part of the outer housing 6, on which the deflectable locking element 80 is also located. The back-up element 16 serves to back up the protruding part 94 of the nut 90, which pushes down the deflectable element 80 in the radial direction R. The protruding part 94 and the deflectable locking element 80 both have a wedge-like shape that tapers towards the front end 94F and the free end 80F, respectively, to allow an easier contacting and deflecting. In the radial direction R, the protruding part 94 has a width that does not allow the free end 80F of the deflectable locking element 8 to disengage the rotatory locking. If the free end 80F seeks to move outwards against the radial direction R, the force is transmitted via the protruding part 94 to the back-up element 16. The back-up element 16 is, due to the closed ring structure, very rigid and does not allow movements of the protruding part 94.

In Fig. 5, the cavity 11 is shown. On a cable-sided end of the cavity 11, a free end 20 of the cable 2 protrudes into the cavity 11. The free end 20 allows a small elastic deflection of the cable 2. From the other side, a free end 12 of the intermediate element 10 protrudes into the cavity 11. The free end 12 of the intermediate element 10 is plugged into the free end 20 of the cable 2. As the strain that can be exerted onto the cable 2 is relieved by the strain relief arrangement 9 via the inner housing 5, the elements within the cavity 11 do not have to take this strain and are thus floating in the cavity 11.

The nut 90 can be screwed to the inner housing 5. Together with the inner housing 5, the nut 90 forms a receiving pocket 59 for the free end 80F of the deflectable locking element 80. Thus, the free end 80F is protected and cannot be damaged or be moved out of the groove 82.

Further, a sealing element 165, for sealing the inner housing 5 to the outer housing 6, is shown.

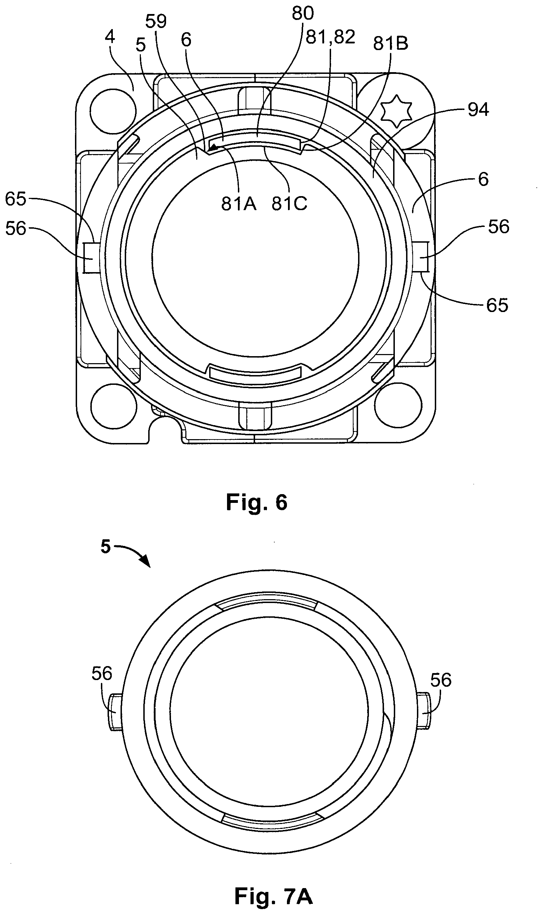

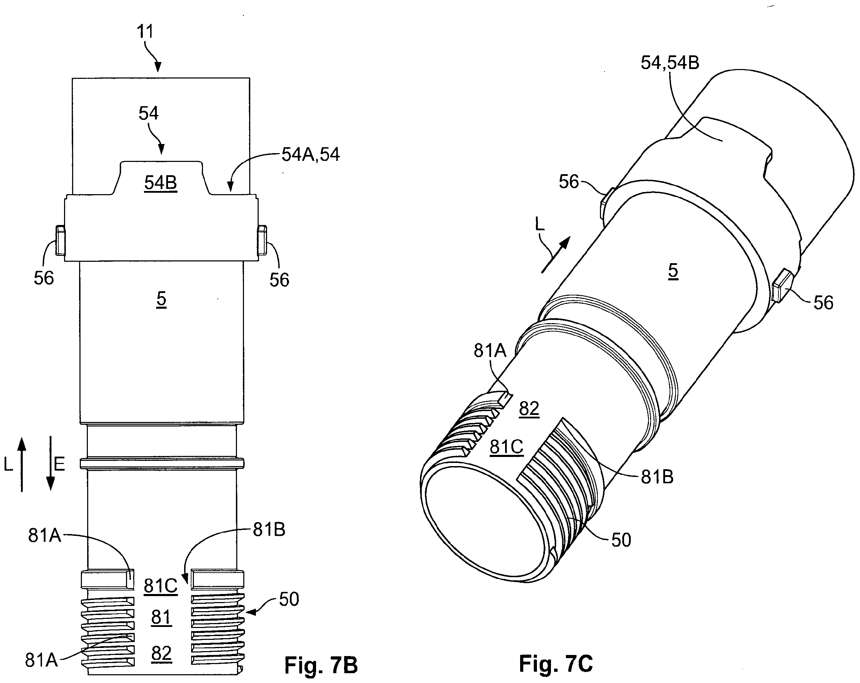

In Fig. 6, a front view of the connector 1 together with the base plate 4 is shown. It should be noted that, as in the previous figures, some lines are shown that would normally be hidden. However, for better understanding, these lines are shown as full lines. In particular, fixing elements 56 that are located on the inner housing 5 and serve to connect the inner housing 5 to the outer housing 6 in the bayonet style can be seen. They protrude radially outward from the inner housing 5. This can also be seen in Figs. 7A, 7B, and 7C.

As can be seen in Figs. 6, 4 and 7B, the side wall 81A of the groove 81 that can be found on the left hand side in Figs. 4, 6, 7B is slanted or inclined. This side wall 81A is not perpendicular to the basically cylindrical outer shape of the inner housing 5 in this area and to the bottom 81C of the groove 81. This side wall 81A thus provides a ramp-like structure which can help to disengage the latch-like deflectable locking element 80 by rotating the inner housing 5 relative to the outer housing 6 about the longitudinal direction L, for example if the deflectable locking element 80 has lost its elasticity due to an aging of the material of the outer housing 6. The other side wall 81B, however, does not have to be inclined as the inner housing 5 and the outer housing 6 can not rotate in this direction anyway due to the bayonet-like connection of the two.

In Figs. 7A, 7B and 7C, fixing elements 54 located on the inner housing 5 that serve to fix the inner housing 5 to the base plate 4 are shown. These comprise in particular front stop faces 54A that block a further insertion of the inner housing 5 to the base plate 4 and protrusions 54B that block a rotation in the lateral movement of the inner housing 5 relative to the base plate 4. In the inserted state, the inner housing 5 can thus only be moved out of contact with the base plate 4 counter to the longitudinal direction L and in the extraction direction E. However, this movement is blocked by the outer housing 6 when fixing elements 56 on the inner housing 5 engage corresponding fixing elements 65 on the inside of the outer housing 6.

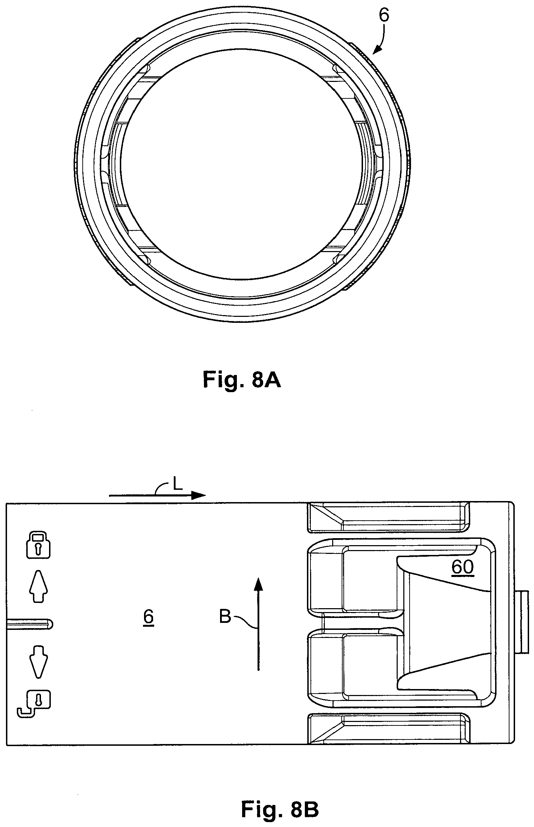

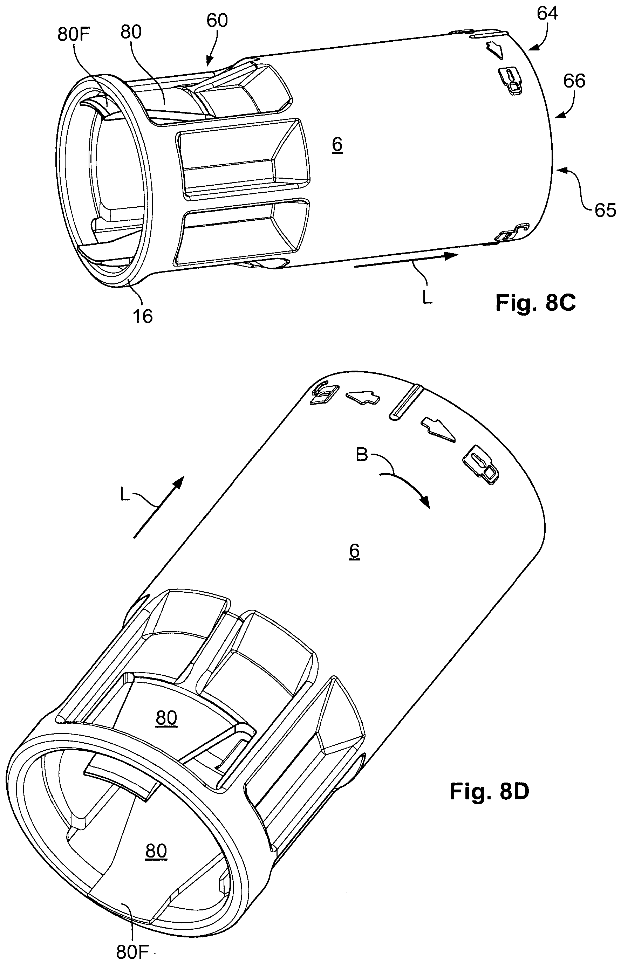

In Figs. 8A, 8B, 8C and 8D, the inner housing 6 is shown from different angles. On a front end 66 facing the base plate 4 in the connected state, fixing elements 64 and 65 for fixing the outer housing 6 to the base plate 4 and the inner housing 5, respectively, are provided on the outer housing 6.

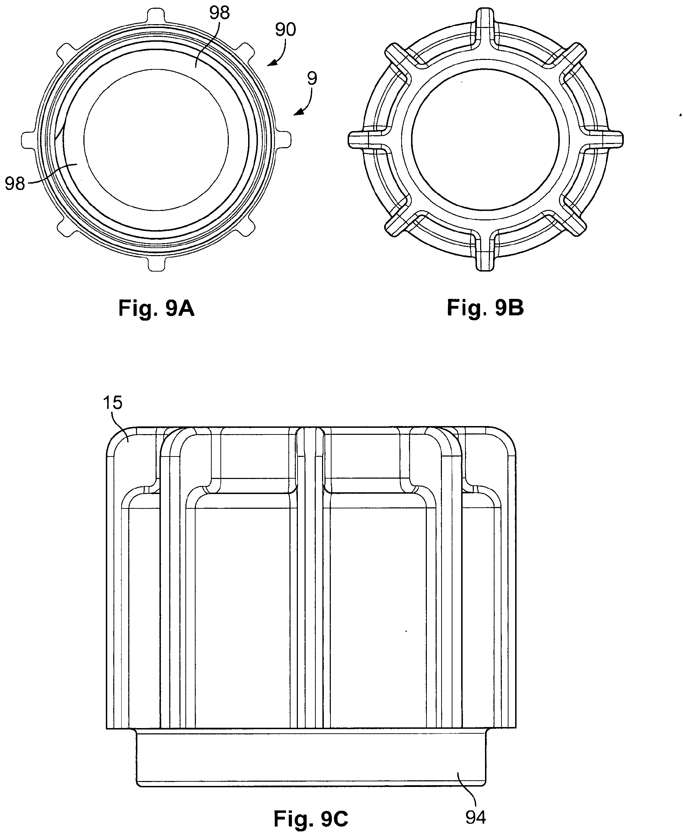

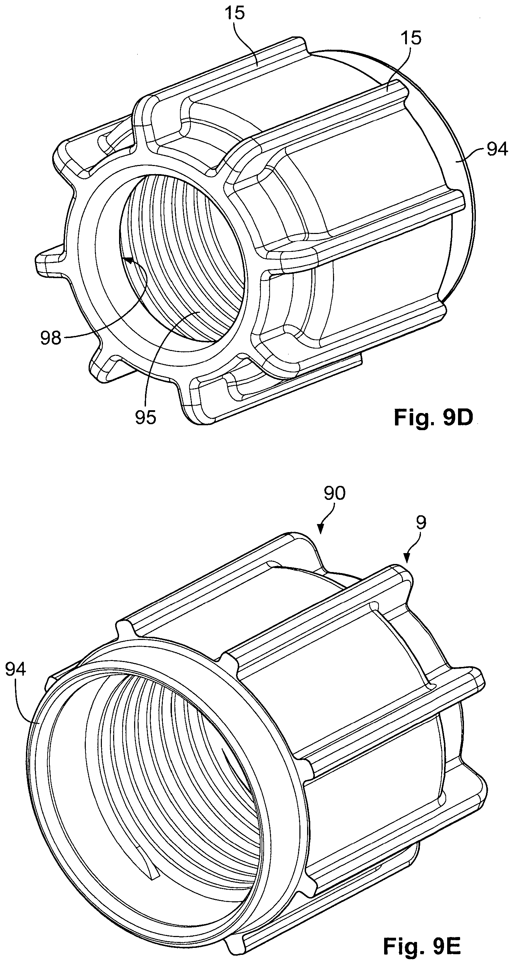

In Figs. 9A, 9B, 9C, 9D and 9E, the nut 90 that is a part of the strain relief arrangement 9 is shown from different angles. For an easy operation, the nut 90 has gripping sections 15 that protrude in a rib-like manner radially outwards. On the inside, the nut 90 has a counter thread 95 for connection to the inner housing 5. To allow a rotation relative to the ring-like back-up element 16, the protruding part 94 has a cylindrical outer shape. In order to squeeze the squeezable body 92, the nut 90 has a pressing face 98.

### Reference signs

- 1: connector
- 2: cable
- 3: counter connector
- 4: base plate
- 5: inner housing
- 6: outer housing
- 7: transceiver
- 8: rotatory locking arrangement
- 9: strain relief arrangement
- 10: intermediate element
- 11: cavity
- 12: free end of intermediate element
- 13: connector assembly
- 15: gripping element
- 16: back-up element
- 20: free end of cable
- 50: thread
- 54: fixing element
- 54A, 54B: fixing element
- 56: fixing element
- 59: receiving pocket
- 60: opening
- 64: fixing element
- 65: fixing element
- 66: front end
- 80: deflectable locking element
- 80F: free end
- 81: groove
- 81A, 81B: side wall
- 81C: bottom
- 82: counter locking element
- 90: nut
- 91: cable engagement member
- 92: radially squeezable body
- 94: protruding part
- 94F: front end
- 95: counter thread
- 96: through-hole
- 98: pressing face
- 165: sealing element

- B: bayonet direction
- E: extraction direction
- F: final position
- I: initial position
- L: longitudinal direction
- R: radial direction
- S: locking position

## Claims

1. Connector (1) for a cable, said connector (1) comprising an outer housing (6), an inner housing (5), said inner housing (5) adapted to be at least partially received within said outer housing (6), a rotatory locking arrangement (8) comprising a deflectable locking element (80); a strain relief arrangement (9), being adapted to be moved along an assembly path with respect to at least one of said inner housing (5) and said outer housing (6), said assembly path starting at an initial position (I) and ending at a final position (F), said strain relief arrangement (9) being adapted to engage said rotatory locking arrangement (8) by getting into contact with the deflectable locking element (80) along said assembly path from a locking position (S) on, said locking position (S) being located between said initial position (I) and said final position (F), said rotatory locking arrangement (8) being adapted to couple said inner housing (5) and said outer housing (6) in a rotatory locked manner upon engagement by said strain relief arrangement (9) **characterized in that** said strain relief arrangement comprises a nut (90), which nut (90) together with the deflectable locking element (80) ensures that the rotatory locking between the inner housing (5) and the outer housing (6) is performed before the strain relief arrangement (9) comes into full operation

2. Connector (1) according to claim 1, wherein said rotatory locking arrangement (8) has at least one deflectable locking element (80), said locking element (80) being deflected upon engagement of said strain relief arrangement (9) and said rotatory locking arrangement (8).

3. Connector (1) according to one of claims 1 or 2, wherein said rotatory locking arrangement (8) is arranged accessible from an outside of said outer housing (6).

4. Connector (1) according to one of claims 1 to 3, wherein said strain relief arrangement (9) is adapted to be screwed onto at least one of said inner housing (5) and outer housing (6).

5. Connector (1) according to any of claims 1 to 4, wherein said inner housing (4) and said outer housing (6) are rotatable with respect to each other if the rotatory locking arrangement (8) is located between said initial position (I) and said locking position (S).

6. Connector (1) according to any of claims 1 to 5, wherein said strain relief arrangement (9) comprises a cable engagement member (91), said cable engagement member (91) being adapted to be operated into engagement with a cable (2), reaching into at least one of said inner housing (5) and said outer housing (6), said operation into engagement not taking place before said strain relief arrangement (9) has passed the locking position (S).

7. Connector (1) according to claim 6, wherein said cable engagement member (91) comprises a radially squeezable body (92), said radially squeezable body (92) being provided with a through-hole (96), said through-hole (96) being adapted to receive said cable (2).

8. Connector (1) according to any of claims 1 to 7, wherein said inner housing (5) and said outer housing (6) are both provided at their end (66) opposite the strain relief arrangement (9) with fixing elements (54, 64), respectively, said fixing elements (54, 64) being adapted to engage a complementary counter connector (3).

9. Connector (1) according to any of claims 1 to 8, wherein said strain relief arrangement (9) is mounted to said inner housing (5).

10. Connector assembly (13) comprising at least one connector (1) according to any of claims 1 to 9, the connector assembly (13) further comprising a counter connector (3), said counter connector (3) being adapted to be positively locked to said inner housing (5) and said outer housing (6) in a first locking situation, said strain relief arrangement locking said first locking situation between said locking position (S) and said final position (F).

## Patentansprüche

1. Verbinder (1) für ein Kabel, wobei der Verbinder (1) ein äußeres Gehäuse (6), ein inneres Gehäuse (5), das so eingerichtet ist, dass es wenigstens teilweise in dem äußeren Gehäuse (6) aufgenommen wird, eine Dreh-Arretieranordnung (8), die ein biegbares Arretierelement (80) umfasst, sowie eine Zugentlastungsanordnung (9) umfasst, die so eingerichtet ist, dass sie entlang eines Montage-Weges in Bezug auf das innere Gehäuse (5) oder/und das äußere Gehäuse (6) bewegt wird, wobei der Montage-Weg an einer Anfangsposition (l) beginnt und an einer Endposition (F) endet, die Zugentlastungsanordnung (9) so eingerichtet ist, dass sie mit der Dreh-Arretieranordnung (8) in Eingriff kommt, indem sie mit dem biegbaren Arretierelement (80) entlang des Montage-Weges von einer Arretierposition (S) ausgehend in Kontakt kommt, wobei sich die Arretierposition (S) zwischen der Anfangsposition (I) und der Endposition (F) befindet, die Dreh-Arretieranordnung (8) so eingerichtet ist, dass sie das innere Gehäuse (5) und das äußere Gehäuse (6) bei Eingriff durch die Zugentlastungsanordnung (9) in Dreharretierung koppelt, **dadurch gekennzeichnet, dass** die Zugentlastungsanordnung eine Mutter (90) umfasst, wobei die Mutter (90) zusammen mit dem biegbaren Arretierelement (80) gewährleistet, dass die Dreharretierung zwischen dem inneren Gehäuse (5) und dem äußeren Gehäuse (6) durchgeführt wird, bevor die Zugentlastungsanordnung (9) vollständig funktionsfähig ist.

2. Verbinder (1) nach Anspruch 1, wobei die Dreh-Arretieranordnung (8) wenigstens ein biegbares Arretierelement (80) aufweist, wobei das Arretierelement (80) bei Eingriff der Zugentlastungsanordnung (9) und der Dreh-Arretieranordnung (8) gebogen wird.

3. Verbinder (1) nach einem der Ansprüche 1 oder 2, wobei die Dreh-Arretieranordnung (8) von einer Außenseite des äußeren Gehäuses (6) zugänglich angeordnet ist.

4. Verbinder (1) nach einem der Ansprüche 1 bis 3, wobei die Zugentlastungsanordnung (9) so eingerichtet ist, dass sie auf das innere Gehäuse (5) oder/und das äußere Gehäuse (6) aufgeschraubt wird.

5. Verbinder (1) nach einem der Ansprüche 1 bis 4, wobei das innere Gehäuse (4) und das äußere Gehäuse (6) zueinander gedreht werden können, wenn sich die Dreh-Arretieranordnung (8) zwischen der Anfangsposition (I) und der Arretierposition (S) befindet.

6. Verbinder (1) nach einem der Ansprüche 1 bis 5, wobei die Zugentlastungsanordnung (9) ein Kabel-Eingriffselement (91) umfasst und das Kabel-Eingriffselement (91) so eingerichtet ist, dass es mit einem Kabel (2) in Eingriff gebracht wird, das in das innere Gehäuse (5) oder/und das äußere Gehäuse (6) hinein reicht, wobei der Eingriffsvorgang erst stattfindet, wenn die Zugentlastungsanordnung (9) die Arretierposition (S) passiert hat.

7. Verbinder (1) nach Anspruch 6, wobei das Kabel-Eingriffselement (91) einen radial zusammendrückbaren Körper (92) umfasst, wobei der radial zusammendrückbare Körper (92) mit einem Durchgangsloch (96) versehen ist und das Durchgangsloch (96) zum Aufnehmen des Kabels (2) eingerichtet ist.

8. Verbinder (1) nach einem der Ansprüche 1 bis 7, wobei das innere Gehäuse (5) und das äußere Gehäuse (6) an ihrem der Zugentlastungsanordnung (9) gegenüberliegenden Ende (66) beide jeweils mit Befestigungsteilen (54, 64) versehen sind, wobei die Befestigungsteile (54, 64) zum Eingriff mit einem komplementären Gegenverbinder (3) eingerichtet sind.

9. Verbinder (1) nach einem der Ansprüche 1 bis 8, wobei die Zugentlastungsanordnung (9) an dem inneren Gehäuse (5) angebracht ist.

10. Verbinderanordnung (13), die wenigstens einen Verbinder (1) nach einem der Ansprüche 1 bis 9 umfasst, wobei die Verbinderanordnung (13) des Weiteren einen Gegenverbinder (3) umfasst und der Gegenverbinder (3) so eingerichtet ist, dass er in einer ersten Arretier-Situation an dem inneren Gehäuse (5) und dem äußeren Gehäuse (6) formschlüssig arretiert ist, und die Zugentlastungsanordnung die erste Arretier-Situation zwischen der Arretierposition (S) und der Endposition (F) arretiert.

## Revendications

1. Connecteur (1) pour un câble, ledit connecteur (1) comprenant un boîtier externe (6), un boîtier interne (5), ledit boîtier interne (5) étant adapté pour être reçu au moins partiellement dans ledit boîtier externe (6), ainsi qu'un agencement de verrouillage rotatif (8) comprenant un élément de verrouillage flexible (80) ; un agencement de décharge de contrainte (9), adapté pour être déplacé le long d'une trajectoire d'assemblage par rapport à au moins un boîtier parmi ledit boîtier interne (5) et ledit boîtier externe (6), ladite trajectoire d'assemblage commençant à une position initiale (1) et se terminant à une position finale (F), ledit agencement de décharge de contrainte (9) étant adapté pour s'engager avec ledit agencement de verrouillage rotatif (8) en venant en contact avec l'élément de verrouillage flexible (80) le long de ladite trajectoire d'assemblage depuis une position de verrouillage (S), ladite position de verrouillage (S) étant située entre ladite position initiale (I) et ladite position finale (F), ledit agencement de verrouillage rotatif (8) étant adapté pour coupler ledit boîtier interne (5) et ledit boîtier externe (6) par verrouillage rotatif lors d'un engagement avec ledit agencement de décharge de contrainte (9),
**caractérisé en ce que** ledit agencement de décharge de contrainte comprend un écrou (90), ledit écrou (90) assurant conjointement avec l'élément de verrouillage flexible (80) que le verrouillage rotatif entre le boîtier interne (5) et le boîtier externe (6) est effectué avant que l'agencement de décharge de contrainte (9) soit entièrement opérationnel.

2. Connecteur (1) selon la revendication 1, dans lequel ledit agencement de verrouillage rotatif (8) comprend au moins un élément de verrouillage flexible (80), ledit élément de verrouillage (80) étant fléchi lors d'un engagement dudit agencement de décharge de contrainte (9) et dudit agencement de verrouillage rotatif (8).

3. Connecteur (1) selon l'une des revendications 1 et 2, dans lequel ledit agencement de verrouillage rotatif (8) est agencé pour être accessible depuis l'extérieur dudit boîtier externe (6).

4. Connecteur (1) selon l'une des revendications 1 à 3, dans lequel ledit agencement de décharge de contrainte (9) est adapté pour être vissé sur au moins un boîtier parmi ledit boîtier interne (5) et ledit boîtier externe (6).

5. Connecteur (1) selon l'une quelconque des revendications 1 à 4, dans lequel ledit boîtier interne (4) et ledit boîtier externe (6) sont rotatifs l'un par rapport à l'autre si l'agencement de verrouillage rotatif (8) est situé entre ladite position initiale (I) et ladite position de verrouillage (S).

6. Connecteur (1) selon l'une quelconque des revendications 1 à 5, dans lequel ledit agencement de décharge de contrainte (9) comprend un élément d'engagement de câble (91), ledit élément d'engagement de câble (91) étant adapté pour être engagé avec un câble (2), en entrant dans au moins un boîtier parmi ledit boîtier interne (5) et ledit boîtier externe (6), ledit engagement ne s'effectuant pas avant que ledit agencement de décharge de contrainte (9) ait dépassé la position de verrouillage (S).

7. Connecteur (1) selon la revendication 6, dans lequel ledit élément d'engagement de câble (91) comprend un corps compressible radialement (92), ledit corps compressible radialement (92) étant pourvu d'un trou traversant (96), ledit trou traversant (96) étant adapté pour recevoir ledit câble (2).

8. Connecteur (1) selon l'une quelconque des revendications 1 à 7, dans lequel ledit boîtier interne (5) et ledit boîtier externe (6) sont tous deux pourvus respectivement à leur extrémité (66) opposée à l'agencement de décharge de contrainte (9) d'éléments de fixation (54, 64), lesdits éléments de fixation (54, 64) étant adaptés pour s'engager avec un contre-connecteur complémentaire (3) .

9. Connecteur (1) selon l'une quelconque des revendications 1 à 8, dans lequel ledit agencement de décharge de contrainte (9) est monté sur ledit boîtier interne (5).

10. Ensemble de connecteur (13) comprenant au moins un connecteur (1) selon l'une quelconque des revendications 1 à 9, l'ensemble de connecteur (13) comprenant en outre un contre-connecteur (3), ledit contre-connecteur (3) étant adapté pour être verrouillé positivement avec ledit boîtier interne (5) et ledit boîtier externe (6) dans une première situation de verrouillage, ledit agencement de décharge de contrainte verrouillant ladite première situation de verrouillage entre ladite position de verrouillage (S) et ladite position finale (F).
